# EUROPEAN PATENT APPLICATION

(11) **EP 4 599 963 A1**
(43) Date of publication of application: **13.08.2025**
(21) Application number: 25156609.7
(22) Date of filing: 07.02.2025
(51) Int. Cl.: B23B 51/00

(54) **DRILL BIT**

(30) Priority: 09.02.2024 US 202463551800 P
(71) Applicant: Techtronic Cordless GP, Anderson, SC 29621 (US)
(72) Inventor: FAUSS, Trevor, Anderson, 29621 (US); WACKER II, Charles, Anderson, 29621 (US); LOMBARDI, Keith, Anderson, 29621 (US); EVATT, Thomas, Anderson, 29621 (US)
(74) Representative: Meissner Bolte Partnerschaft mbB

(57) **Abstract**

A drill bit including a body extending from a shank to a point angle, wherein the body includes a plurality of steps each associated with a different cutting diameter; a first groove disposed between a first pair of adjacent steps of the plurality of steps and radially inset from an outer diameter of each of the first pair of adjacent steps; and a first visual indicator disposed in the first groove.

## Description

### CROSS-REFERENCE TO RELATED APPLICATIONS

The present application claims priority to U.S. Provisional Application Serial No. 63/551,800 filed on February 9, 2024, the disclosure of which is incorporated by reference herein in its entirety.

### FIELD

The present disclosure relates generally to drill bits, and more particularly to stepped drill bits.

### BACKGROUND

Drill bits are used to bore into material of a workpiece to form an opening. Drill bits are often rotatably driven by electric power tools, like drills, with selectively engageable chucks that interface with a shank of the drill bit. Example types of drill bits include pilot point bits, auger drill bits, spade drill bits, Forstner drill bits, countersink drill bits, stepped drill bits, and hole saws. Yet other types of drill bits exist, particularly for boring into specialty and/or fragile materials, such as glass and masonry.

When selecting a drill bit, size is a critical factor. Where the drill bit is oversized for an application, the resulting opening may be too large to engage a fastener or component inserted into the bore. The fastener may easily pull out from the opening, mitigating effectiveness. To fix the oversized opening, the operator may patch the material and redrill or use a filler material to shrink the opening. Neither of these solutions are desired as both require additional work and often result in poor aesthetic and strength. Conversely, where the drill bit is undersized, the resulting hole is too small to accept fasteners and other components. As a result, the operator is required to select a larger drill bit and redrill the opening. By initially selecting a proper size drill bit, or in the case of stepped drills, by selecting the appropriate final step, the drilling operation is made easier and the results are better.

To reduce sizing issues when selecting drill bits, improved drill bits are desired in the art. In particular, stepped drill bits which provide quick and easy user identification of bore diameter would be advantageous.

### BRIEF DESCRIPTION

Aspects and advantages of the invention in accordance with the present disclosure will be set forth in part in the following description, or may be obvious from the description, or may be learned through practice of the technology.

In accordance with one embodiment, a drill bit is provided. The drill bit includes a body extending from a shank to a point angle, wherein the body comprises: a plurality of steps each associated with a different cutting diameter; a first groove disposed between a first pair of adjacent steps of the plurality of steps and radially inset from an outer diameter of each of the first pair of adjacent steps; and a first visual indicator disposed in the first groove.

In accordance with another embodiment, a method of boring a recess into a workpiece is provided. The method includes moving a drill bit into a recess in a workpiece; with the drill bit extending into the recess, inspecting the drill bit at a location immediately adjacent to the workpiece to identify a visual indicator disposed in a groove of the drill bit at the location; referencing the visual indicator to a lookup table; and determining a diameter of the recess based on the referencing.

In accordance with another embodiment, a stepped drill bit is provided. The stepped drill bit includes a shank; and a generally conical body extending from the shank to a point angle, wherein the generally conical body comprises: a plurality of sequentially larger steps arranged from the point angle to the shank, each of the steps having a cutting surface associated with a different cutting diameter; a first groove disposed between a first pair of adjacent steps of the plurality of sequentially larger steps and radially inset from an outer diameter of each of the first pair of adjacent steps; and a second groove disposed between a second pair of adjacent steps of the plurality of sequentially larger steps and radially inset from an outer diameter of each of the second pair of adjacent steps.

These and other features, aspects and advantages of the present invention will become better understood with reference to the following description and appended claims. The accompanying drawings, which are incorporated in and constitute a part of this specification, illustrate embodiments of the technology and, together with the description, serve to explain the principles of the technology.

### BRIEF DESCRIPTION OF THE DRAWINGS

A full and enabling disclosure of the present invention, including the best mode of making and using the present systems and methods, directed to one of ordinary skill in the art, is set forth in the specification, which makes reference to the appended figures, in which:
FIG. 1 is a side view of a drill bit held by a chuck of a drill in accordance with embodiments of the present disclosure;
FIG. 2 is a side view of the drill bit in accordance with embodiments of the present disclosure;
FIG. 3 is a side view of a portion of the drill bit as seen in Box B in FIG. 2 in accordance with embodiments of the present disclosure;
FIG. 4 is a perspective view of the drill bit in accordance with embodiments of the present disclosure;
FIG. 5 is an end view of the drill bit in accordance with embodiments of the present disclosure;
FIG. 6 is a flow chart of a method of boring a recess into a workpiece in accordance with embodiments of the present disclosure; and
FIG. 7 is a lookup table for reference in determining bore diameter using a visual indicator of a drill bit in accordance with embodiments of the present disclosure.

### DETAILED DESCRIPTION

Reference now will be made in detail to embodiments of the present invention, one or more examples of which are illustrated in the drawings. The word "exemplary" is used herein to mean "serving as an example, instance, or illustration." Any implementation described herein as "exemplary" is not necessarily to be construed as preferred or advantageous over other implementations. Moreover, each example is provided by way of explanation, rather than limitation of, the technology. In fact, it will be apparent to those skilled in the art that modifications and variations can be made in the present technology without departing from the scope or spirit of the claimed technology. For instance, features illustrated or described as part of one embodiment can be used with another embodiment to yield a still further embodiment. Thus, it is intended that the present disclosure covers such modifications and variations as come within the scope of the appended claims and their equivalents. The detailed description uses numerical and letter designations to refer to features in the drawings. Like or similar designations in the drawings and description have been used to refer to like or similar parts of the invention.

As used herein, the terms "first", "second", and "third" may be used interchangeably to distinguish one component from another and are not intended to signify location or importance of the individual components. The singular forms "a," "an," and "the" include plural references unless the context clearly dictates otherwise. The terms "coupled," "fixed," "attached to," and the like refer to both direct coupling, fixing, or attaching, as well as indirect coupling, fixing, or attaching through one or more intermediate components or features, unless otherwise specified herein. As used herein, the terms "comprises," "comprising," "includes," "including," "has," "having" or any other variation thereof, are intended to cover a non-exclusive inclusion. For example, a process, method, article, or apparatus that comprises a list of features is not necessarily limited only to those features but may include other features not expressly listed or inherent to such process, method, article, or apparatus. Further, unless expressly stated to the contrary, "or" refers to an inclusive- or and not to an exclusive- or. For example, a condition A or B is satisfied by any one of the following: A is true (or present) and B is false (or not present), A is false (or not present) and B is true (or present), and both A and B are true (or present).

Terms of approximation, such as "about," "generally," "approximately," or "substantially," include values within ten percent greater or less than the stated value. When used in the context of an angle or direction, such terms include within ten degrees greater or less than the stated angle or direction. For example, "generally vertical" includes directions within ten degrees of vertical in any direction, e.g., clockwise or counter-clockwise.

Benefits, other advantages, and solutions to problems are described below with regard to specific embodiments. However, the benefits, advantages, solutions to problems, and any feature(s) that may cause any benefit, advantage, or solution to occur or become more pronounced are not to be construed as a critical, required, or essential feature of any or all the claims.

In general, embodiments described herein are directed to a drill bit that provides easy-to-see size identification for rapid determination of bore diameter (also referred to as a recess diameter or an opening diameter) in a workpiece. The drill bit described herein can have a generally conical shape, tapering from an enlarged end near a shank to a relatively narrow or pointed tip. The conical shape can be defined by a stepped outer surface including a plurality of steps each supporting or defining a cutting surface. Such drill bits are commonly referred to as stepped drill bits. Each successive step increases in diameter such that as the drill bit passes deeper into the material, the diameter of the resulting opening increases. The operator can thus drill a selected bore diameter by pressing the drill bit into the material until the step having the desired diameter passes into or through the material.

The drill bit includes a visual indication system that permits the user to rapidly identify bore diameter. The visual indication system can include one or more visual indicators disposed on the outer surface of the drill bit. Each of the visual indicators is associated with a different step and provides information about the associated step. For example, a drill bit having three steps can include three visual indicators each associated with one of the three steps. Each of the visual indicators is disposed between the associated step and the shank. In this regard, the step actively cutting into the workpiece is identified by an exposed visual indicator that has not yet penetrated into the workpiece and remains visible for inspection.

The visual indicators may take the form of alphanumeric labeling that allows the operator to read a diameter of the associated step. Alternatively, or in addition, the visual indicators may take the form of a color coding scheme with one or more colors associated with each step. Alternatively, or in addition, the visual indicator may include a physical indicia that is discernable by the operator. For example, the physical indicia can include different notching patterns, different knurling patterns, different projecting structures, different textures, different light reflectivity properties, and/or different groove shapes.

A lookup table may be included with the drill bit that allows the operator to quickly identify bore diameter by comparing one or more of the visual indicators to data contained in the lookup table. As such, the operator can quickly determine bore diameter using the visual indicator.

To determine current bore diameter of an opening in a workpiece the operator positions the drill bit in the opening and inspects the drill bit to identify a visual indicator located nearest, e.g., immediately adjacent, to a nearest surface of the workpiece. The visual indicator located nearest the workpiece corresponds to the step currently disposed within the workpiece, i.e., the step actively cutting material from the workpiece. After identifying a characteristic, e.g., color, of the visual indicator nearest the workpiece, the operator can reference the characteristic against the lookup table to determine the diameter of the step actively cutting material from the workpiece. Using this information, the operator knows the bore diameter being formed, or already formed, by the drill bit.

The visual indicator(s) are positioned along the outer surface of the drill bit at protected locations. The protected locations can include, for example, grooves set back radially from an outermost surface of the drill bit. The visual indicator(s) may be disposed in one or more of such grooves such that at least one of the visual indicators is detectable by the operator during use of the drill bit. During operation of the drill bit, cutting surfaces (such as sharpened edges of the drill bit) disposed along the outer surface of the drill bit cut into the material during each successive rotation of the drill bit, causing the opening to form and enlarge. The grooves are recessed radially from the cutting surfaces to avoid forcible contact between the grooves and the material, thereby protecting the visual indicator(s) against wear over multiple or extended uses.

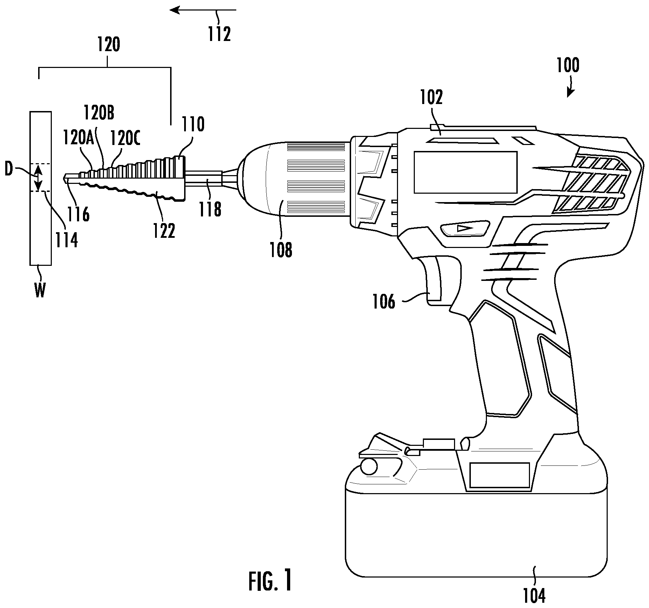

Referring now to the drawings, FIG. 1 illustrates a side view of a drill 100 in accordance with an example embodiment. The depicted drill 100 is a powered hand drill, including, e.g., a body 102 supporting a removable battery 104, a motor electrically coupled to the removable battery 104 and controlled by a trigger 106, and a chuck 108 coupled to the motor and configured to releasably engage a drill bit 110 to rotatably drive the drill bit 110 into a workpiece W in a direction 112 to form an opening 114 in the workpiece W. It should be understood that the drill bit 110 may be used with other types of drills, such as hand drills, pneumatic drills, corded drills, impact drills, or the like.

The drill bit 110 is a stepped drill bit, including a point angle 116, a shank 118, a plurality of steps 120A, 120B, 120C, etc. (collectively referred to as steps 120), and a flute 122. The shank 118 is receivable in the chuck 108 to selectively engage the drill bit 110 with the drill 100. Each of the steps 120 defines a different cutting diameter. For instance, a first step 120A has a first cutting diameter, a second step 120B has a second cutting diameter, and a third step 120C has a third cutting diameter, where the second cutting diameter is greater than the first cutting diameter, and the third cutting diameter is greater than the second cutting diameter. The first step 120A is disposed closer to the point angle 116 and the third step 120C is disposed closer to the shank 118. As the drill bit 110 is rotatably driven by the drill 100 into the workpiece W in the direction 112, the steps 120 progressively penetrate deeper into the workpiece W, causing the opening 114 to increase in diameter D. The maximum size of the resulting opening 114 is typically limited by the maximum cutting diameter of a final step 120 disposed adjacent to the shank 118.

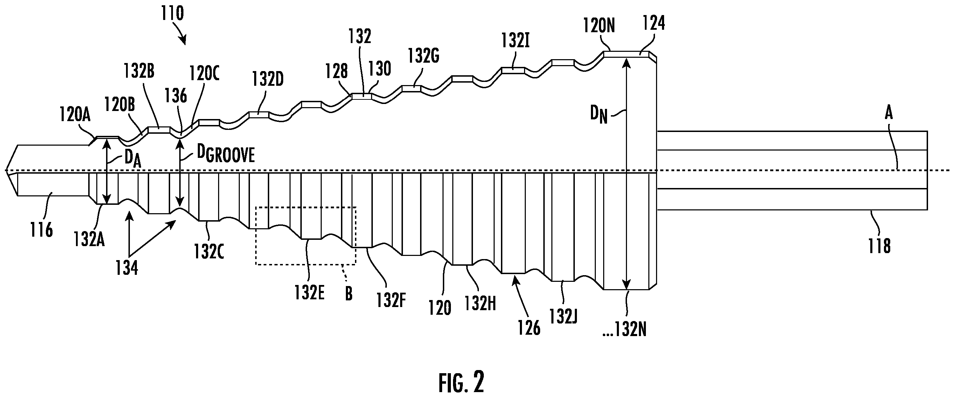

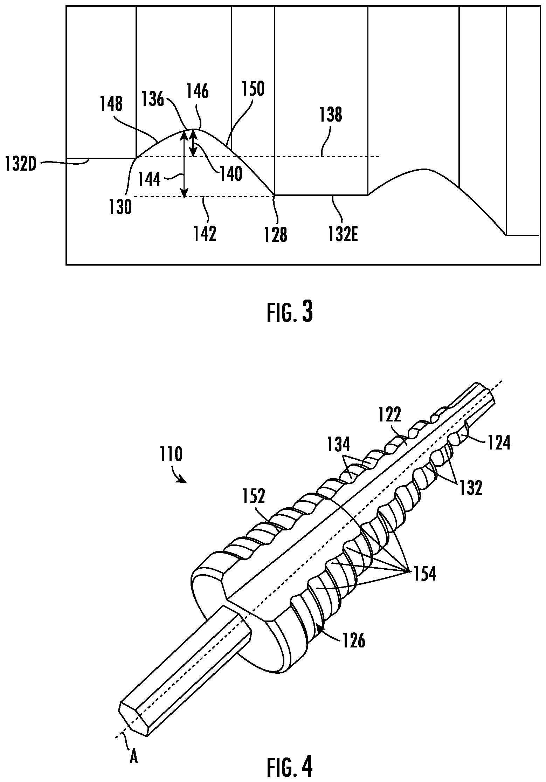

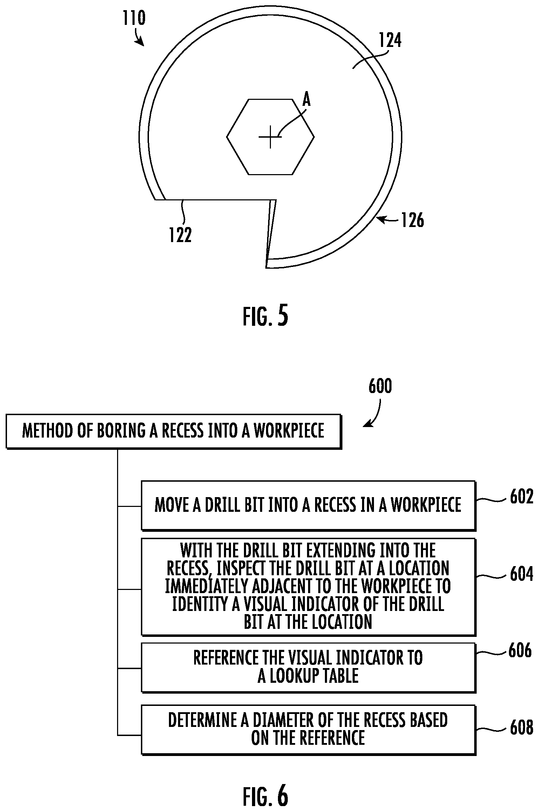

FIGS. 2 to 5 illustrate enlarged views of the drill bit 110 as seen without the drill 100 (i.e., when the shank 118 is disconnected from the chuck 108). Specifically, FIG. 2 illustrates a side view of the drill bit 110, FIG. 3 illustrates an enlarged view of the drill bit 110 as seen in Box B in FIG. 2, FIG. 4 illustrates a perspective view of the drill bit 110, and FIG. 5 illustrates an end view of the drill bit 110 as seen looking from the shank 118 towards the point angle 116.

Referring to FIGS. 2 to 5, the drill bit 110 can define a longitudinal axis A extending from the point angle 116 to the shank 118. The longitudinal axis A is typically oriented parallel, or generally parallel, with direction 112 (FIG. 1) when performing drilling operations in a workpiece W. The drill bit 110 can rotate about the longitudinal axis A (as driven by the drill 100) to remove material from the workpiece W (FIG. 1) and to form the opening 114 in the workpiece W. A cutting surface 152 of the drill bit 110 is defined by each one (or at least one) of the steps 120. The cutting surface 152 includes a sharpened edge configured to remove material from the workpiece W to form the opening 114 as the drill bit 110 is rotated by the drill 100. As the drill bit 110 penetrates deeper into the workpiece, the diameter of the opening increases commensurate with the size of the step 120 presently operating on the workpiece W.

The steps 120 are defined by a body 124 of the drill bit 110. The body 124 is formed from a relatively resilient material capable of cutting through materials like wood, metal, alloy, plastic, fiberglass, and the like. By way of non-limiting example, the body 124 can include steel, titanium, cobalt, tungsten, another similar metal or composite based material. Moreover, the body 124 can include one or more fillers that increase cutting capability, resiliency, or another desirable characteristic of the drill bit 110. In some implementations, the cutting surface(s) 152 are formed from a single piece with the body 124, i.e., unitary with the body 124. In other implementations, the cutting surface(s) 152 can be formed from removable blades having sharpened edges. The operator can sharpen the cutting surface(s) 152 and/or replace worn cutting surface(s) 152 to service the drill bit 110 between uses. In an embodiment, the body 124 is unitary with the point angle 116 and the shank 118 (i.e., the body 124, point angle 116, and shank 118 can be formed from a single piece). In another embodiment, the body 124 may be separate from and joined with the point angle 116 and/or the shank 118.

The steps 120 are defined by an outer surface 126 of the body 124 and can extend circumferentially around the longitudinal axis A perpendicular therewith. In an embodiment, the steps 120 extend continuously in a circumferential direction around a majority of the longitudinal axis A. For example, each of the steps 120 can extend continuously around at least 180° of the longitudinal axis A, such as at least 210° of the longitudinal axis A, such as at least 240° of the longitudinal axis A, such as at least 270° of the longitudinal axis A, such as at least 300° of the longitudinal axis A, such as at least 330° of the longitudinal axis A.

Each step 120 can define a first end 128 and a second end 130 spaced apart from the first end 128 in a direction parallel with the longitudinal axis A. A shoulder 132 extends between the first and second ends 128 and 130 of each step 120. The shoulder 132 may define a cylindrical, or generally cylindrical, surface having a central axis coaxially oriented with the longitudinal axis A. In an embodiment, at least one of the shoulders 132 is canted relative to the longitudinal axis A such that the shoulder(s) 132 taper towards the longitudinal axis A between the first and second ends 128 and 130. Such tapering may reduce drag of the drill bit 110 against the material, increase kerf removal, reduce heat buildup, and/or provide enhanced operability. The shoulders 132 of each step 120 exhibit progressively larger diameters, as measured perpendicular to the longitudinal axis A, from the first step 120A disposed near the point angle 116 to a final step 120N disposed near the shank 118. For example, the shoulder 132 of the first step 120A can have a first diameter D_{A} and the shoulder 132 of the final step 120N can have a final diameter D_{N} greater than the first diameter D_{A}. Each step 120 disposed between the first and final steps 120A and 120N can have a shoulder 132 with a progressively greater diameter between D_{A} and D_{N}.

The outer surface 126 of the body 124 further defines a transition zone 134 disposed between adjacent shoulders 132. In an embodiment, each adjacent pair of shoulders 132 can be separated by one of the transition zones 134. In an embodiment, at least one of the transition zones 134 includes a groove 136 that extends into the body 124. In another embodiment, a plurality of the transition zones 134, such as all of the transition zones 134, each includes a groove 136. The groove(s) 136 can extend continuously around the body 124 in a circumferential direction around at least a portion of the longitudinal axis A, such as around a majority of the longitudinal axis A. The groove(s) 136 can have an inner diameter D_{GROOVE}, as measured perpendicular to the longitudinal axis A, that is less than the diameter (D_{A}, D_{B}, D_{C}, ... or D_{N}) of either shoulder 132 disposed adjacent to the groove 136. In this regard, the groove(s) 136 are recessed from both of the adjacent shoulders 132.

FIG. 3 depicts an enlarged view of the groove 136 disposed between the fourth and fifth shoulders 132D and 132E of the drill bit 110 as seen in accordance with an example embodiment. A line 138 is depicted extending parallel with the longitudinal axis A (FIG. 2) and the fourth shoulder 132D. The line 138 effectively represents the cutting surface 152 of the drill bit 110 at the fourth shoulder 132D. That is, when the drill bit 110 is plunged (moved) into the workpiece W (FIG. 1) and reaches a plunge depth whereby the fourth shoulder 132D is actively removing material from the workpiece W, the diameter of the opening 114 where material is being removed is equal to the diameter of the fourth shoulder 132D. The groove 136 is recessed from the line 138 by a distance 140, as measured perpendicular to the longitudinal axis A. The distance 140 may be at least 0.1 mm, such as at least 0.5 mm, such as at least 1 mm, such as at least 1.5 mm, such as at least 2 mm, such as at least 3 mm, such as at least 4 mm, such as at least 5 mm, such as at least 10 mm. In an embodiment, the distance 140 is no greater than 50 mm, such as no greater than 30 mm, such as no greater than 20 mm. The distance 140 may also be in a range between and including any of the values described above. A line 142 is depicted extending parallel with the longitudinal axis A (FIG. 2) and the fifth shoulder 132E. The line 142 effectively represents the cutting surface 152 of the drill bit 110 at the location associated with the fifth shoulder 132E. The groove 136 is recessed from the line 142 by a distance 144 greater than the distance 140. Thus, the groove 136 is disposed within (internally offset from) a boundary defined by both adjacent shoulders 132.

In an embodiment, the distance 144 can be at least 0.1 mm greater than the distance 140, such as at least 0.5 mm greater than the distance 140, such as at least 1 mm greater than the distance 140, such as at least 2 mm greater than the distance 140, such as at least 5 mm greater than the distance 140. The difference between distances 140 and 144 is defined by a step interval associated with adjacent shoulders 132. For example, where the fourth shoulder 132D has a cutting diameter of 15 mm and the fifth shoulder 132 has a cutting diameter of 20 mm, the difference between distance 140 and 144 is 5 mm.

The depicted groove 136 extends from the second end 130 of the fourth shoulder 132D to the first end 128 of the fifth shoulder 132E. The groove 136 defines a rounded bottom 146 and generally linear walls 148 and 150 extending from the rounded bottom 146 to each of the first and second ends 128 and 130 of the adjacent shoulders 132. In other embodiments, the groove 136 can define a V-shaped bottom 146, a U-shaped bottom, a W-shaped bottom, an S-shaped bottom, or have another profile shape. In an embodiment, at least one of the walls 148 or 150 extending from the bottom 146 of the groove 136 to the first and second ends 128 or 130 may be arcuate or include a plurality of linear segments. It is noted that the other grooves 136 of the drill bit 110 may share any one or more features as described with respect to the groove 136 formed between the fourth and fifth shoulders 132D and 132E. In some implementations, all of the grooves 136 in the drill bit 110 share common cross-sectional shape, common cross-sectional dimension(s), or both. In other implementations, at least two of the grooves 136 have different cross-sectional shapes, different cross-sectional dimension(s), or both. For example, grooves 136 located closer to the shank 118 (FIG. 2) may have extend relatively deeper into the body 124 than grooves 136 located near the point angle 116. The grooves 136 can each progressively change in dimension and/or shape moving between the shank 118 and the point angle 116 or include sets of grooves 136 having similar dimensions and/or shapes. For example, the drill bit 110 can include a plurality of sets of grooves 136, such as three sets of grooves 136, with each set sharing a common dimension and/or shape. Each set of grooves 136 may, but need not, be arranged in order such that all of the first set of grooves 136 are disposed nearest to the shank 118, all of the second set of grooves 136 are disposed next to the first set of grooves, and all of the third set of grooves 136 are disposed between the second set of grooves 136 and the point angle 116. In another embodiment, the sets of grooves 136 may be staggered such that at least two grooves 136 from one of the sets is interposed by at least one groove 136 from another set.

In some implementations, the grooves 136 can be formed by machining the drill bit, such as by milling into the outer surface 126 of the drill bit 110. For example, during manufacturing of the drill bit 110, the grooves 136 can be milled into the body 124 simultaneously or successively with milling the shoulders 132 using a turning tool such as a lathe, a computer numerical control (CNC) machine, or the like. In an embodiment, the shoulders 132 can all be milled into the drill bit 110 first, after which time the grooves 136 can all be milled between each set of adjacent shoulders 132. In another embodiment, the shoulders 132 and grooves 136 can be milled sequentially from one end of the drill bit 110 to the other end of the drill bit 110. That is, one shoulder 132 can be milled, followed by one groove 136, followed by another shoulder 132, followed by another groove 136, etc. This process is repeated to achieve the desired drill bit 110. Yet other methods of forming the grooves 136 may be implemented, including, e.g., etching the grooves 136, abrading the grooves 136, casting the drill bit 110 with the grooves 136 already present, etc. After initial formation, the grooves 136 may be further operated on using a secondary process. For example, the grooves 136 may be abraded and/or polished to a desired surface finish, media-blasted (e.g., sand blasted), primed, chemically washed, or otherwise acted upon to achieve a desired finish.

Referring to FIG. 4, the cutting surface 152 of the drill bit 110 can be defined by an interface formed between the flute 122 and the shoulders 132 and/or between the flute 122 and at least a portion of the transition zones 134. In some implementations, the cutting surface 152 is defined by a single, continuously sharpened edge. In other implementations, the cutting surface 152 can include a plurality of discrete cutting segments spaced apart from one another by non-cutting segments. The non-cutting segments may be unsharpened and/or internally recessed to avoid contact with the workpiece W (FIG. 1). As the drill bit 110 rotates about the longitudinal axis A, the cutting surface(s) 152 remove material from the workpiece W (FIG. 1), allowing the drill bit 110 to plunge deeper into the workpiece W. However, some areas between the flute 122 and the transition zones 134 may not come into contact with the workpiece W as the drill bit 110 rotates. For example, portions of the transition zone 134 recessed from the preceding shoulder 132 (i.e., recessed by distance 140 from the line 138) are not associated with material removal. Instead, the preceding shoulder 132 (i.e., the shoulder 132 that bores into the material prior to the transition zone 134 reaching the material) removes enough material from the workpiece W to allow the transition zone 134 (or at least the portion of the transition zone 134 recessed from line 138) to slide into the opening 114 (FIG. 1) without removing material from the workpiece W. In some implementations, the groove 136 may be spaced apart entirely from the workpiece W as the drill bit 110 rotates. As such, the transition zone 134 (or at least that portion of the transition zone 134 recessed from line 138) does not wear during use of the drill bit 110, or at least does not wear as fast as other portions of the drill bit 110 (such as the cutting surface 152 at the shoulders 132) as a result of a lack of contact with the workpiece W.

In an embodiment, the groove 136, or a portion thereof (such as the bottom 146 of the groove 136), is marked with a visual indicator 154. The visual indicator 154 may include, for example, a color, a pattern, a surface texture, another visually distinguishable feature or attribute, or any combination thereof. The visual indicator 154 may be disposed on the outer surface 126 of the body 124. Each of the grooves 136 can be marked with a different visual indicator 154, e.g., a different color, a different pattern, a different surface texture, etc., such that the current diameter of the opening 114 can be identified while the drill bit 110 is actively driven by the drill 100 or when the drill bit 110 is not actively driven but disposed within an existing opening 114 in a workpiece W. In this regard, an operator (user) can visually inspect the drill bit 110 to determine the current diameter of the opening 114 without having to stop the drilling operation and without having to read small markings or faded lettering located on the drill bit 110.

In an embodiment, the visual indicator 154 includes a plurality of different colors, each different color being disposed in a different groove 136. By way of non-limiting example, the groove 136 between the first shoulder 132A and the second shoulder 132B can be a first color (e.g., red), the groove 136 between the second shoulder 132B and the third shoulder 132C can be a second color (e.g., orange), the groove 136 between the third shoulder 132C and the fourth shoulder 132D can be a third color (e.g., yellow), the groove 136 between the fourth shoulder 132D and the fifth shoulder 132E can be a fourth color (e.g., green), the groove 136 between the fifth shoulder 132E and the sixth shoulder 132F can be a fifth color (e.g., blue), etc. As the drill bit 110 rotates, the operator can visually inspect the drill bit 110 to identify which of the colors is most proximate to the surface of the workpiece W (FIG. 1). The operator can cross-reference the identified color with a lookup table or other resource to determine the dimension of the shoulder 132 actively boring material from the workpiece W. As such, the operator can determine the current diameter of the opening 114, the current plunge depth, the next diameter to be drilled, and/or other information associated with the drilling operation.

In another embodiment, the drill bit 110 can be marked to provide information associated with less than all of the shoulders 132. For example, the groove 136 between the first shoulder 132A and the second shoulder 132B can have a first marking (e.g., a first color), the groove 136 between the third shoulder 132C and the fourth shoulder 132D can have a second marking (e.g., a second color), the groove 136 between the sixth shoulder and the seventh shoulder 132G can have a third marking (e.g., a third color), and the remaining transition zones 134 may either include a groove 136 without a marking (e.g., having the coloration of the underlying material of the body 124) or lack a groove 136. Where only some of the transition zones 134 are marked (e.g., colored), the markings associated with the marked transition zones 134 can correspond to particular hole diameters D (FIG. 1). That is, the marked transition zones 134 may correspond to common hole sizes (e.g., where D is equal to ½", ¾" or 1") while the unmarked transition zones 134 may correspond to uncommon (not frequently used) hole sizes (e.g., where D is equal to 3/7", 5/9", 8/11", etc.). In an embodiment, a batch of drill bits 110 includes a plurality of drill bits 110 having differently labeled transition zones 134. For instance, the batch of drill bits 110 can include a first drill bit having markings associated with hole diameters D commonly used by electricians and a second drill bit having markings associated with hole diameters D commonly used by plumbers. The batch of drill bits 110 thus includes markings associated with both electrical and plumbing work.

In an embodiment, the batch of drill bits 110 can include a plurality of drill bits 110 each having a relatively different (unique) configuration. The operator (user) can swap between the different drill bits 110 based on the type of work being performed. Swapping between the drill bits 110 is performed by loosening the chuck 108 (FIG. 1) until the drill bit 110 is removable therefrom, removing the drill bit 110 from the chuck 108, selecting a suitable drill bit 110 based on the task being performed, inserting the selected drill bit 110 into the chuck 108, and tightening the chuck 108 to secure the selected drill bit 110 to the drill 100. The shanks 118 of the different drill bits 110 of the batch can share a common diameter, a common length, or both, such that the operator can easily swap between different drill bits without having to further adjust the chuck 108 after removing the first drill bit 110.

In an embodiment, the batch of drill bits 110 is provided with a housing (not illustrated) which stores the various drill bits 110. The housing can include markings associated with different drill bit receiving areas such that the operator (user) can quickly identify and select between the drill bits 110 based on the markings associated with the location of each drill bit 110.

As described above, each groove 136 can include a unique identifier that allows the operator to determine an operational aspect of the drill bit 110 during a drilling operation. In another embodiment, the visual indicator 154 is formed by an alternating marking (e.g., coloration) of the grooves 136. For example, the groove 136 between the first shoulder 132A and the second shoulder 132B can have a coloration different than the underlying material of the body 124, the groove 136 between the second shoulder 132B and the third shoulder 132C can have the same coloration as the underlying material of the body 124, the groove 136 between the third shoulder 132C and the fourth shoulder 132D can have a coloration different than the underlying material of the body 124, the groove 136 between the fourth shoulder 132D and the fifth shoulder 132E can have the same coloration as the underlying material of the body 124, etc. As such, the grooves 136 can alternate between marked (e.g., colored) and unmarked (e.g., uncolored). In some instances, the marking (e.g., coloration) applied to the marked (e.g., colored) grooves 136 can be the same across all grooves 136. In other instances, the marking (e.g., coloration) can be different for different grooves 136.

In an embodiment, the marking (e.g., color) applied to the grooves 136 can be permanent. Example processes for applying the color to the groove 136 include spraying, painting, flow coating, chemical-vapor deposition, electrostatic deposition, or the like. In some instances, the markings (e.g., colors) may be applied individually at each of the grooves 136, with each groove 136 receiving a unique color. In other instances, the grooves 136 may be colored simultaneously.

During use, the marking (e.g., color) wears at a reduced rate as compared to instances where color is applied elsewhere along the cutting surface 152 as the groove 136 is recessed from the cutting location and thus not subjected to high-speed rubbing with the workpiece W. As such, the color lasts for a longer duration of time and use. Moreover, the drill bit 110 can be sharpened without affecting the color. In this regard, drill bits 110 described herein can exhibit increased operational life and simplify user operation without losing their rapid identification quality.

While the above-described drill bit 110 is shown in the accompanying figures as having a generally conical, stepped shape, in other instances the drill bit 110 can have a different shape, such as a cylindrical shape (e.g., a helical drill bit). The shanks 118 of different drill bits 110 can be marked or sized to differentiate between different types of drill bits. In some instances, the point angle 116 can be replaced with a different type of leading surface for initial penetration into the workpiece W.

FIG. 6 illustrates a flow chart of a method of boring a recess into a workpiece in accordance with an embodiment. In general, the method 600 will be described with reference to a drill bit 110 including a stepped outer surface having a groove 136 with a visual indicator 154 described above with reference to FIGS. 1 to 5. These drill bits are often called stepped drill bits. Although FIG. 6 depicts steps performed in a particular order for purposes of illustration and discussion, the method discussed herein is not limited to any particular order or arrangement. One skilled in the art, using the disclosure provided herein, will appreciate that various steps of the method disclosed herein can be omitted, rearranged, combined, and/or adapted in various ways without deviating from the scope of the present disclosure.

The method 600 is generally used to bore (drill) a recess into a workpiece. In some instances, boring the recess is performed in a single action by introducing the drill bit to an exposed, undrilled surface of the workpiece and applying pressure to the drill bit while engaging a motor of the drill to rotate the drill bit and remove kerf from the workpiece. In other instances, boring the recess is performed at a preexisting recess where the recess is already partially formed. For example, the workpiece may include an existing recess that is too small for a particular application. For instance, the preexisting recess can define a ½" diameter where a ¾" diameter recess is required. Further boring enlarges the recess, causing the diameter of the recess to increase for the particular application.

The method 600 includes moving 602 the drill bit into the recess in the workpiece. The term "recess" is used herein to describe an opening that extends into a material but does not fully penetrate the material and an opening that extends fully through the material. In some instances, moving 602 the drill bit into the recess causes an opening to pass entirely through the workpiece. In other instances, moving 602 the drill bit into the recess does not cause an opening to extend entirely through the workpiece. While moving 602 the drill bit into the recess (and optionally prior to contacting the drill bit with the workpiece), the operator (user) activates a trigger of the drill to which the drill bit is attached to rotatably drive the drill bit to cut kerf from the workpiece. As the drill bit plunges into the workpiece, the drill bit extracts kerf from the recess, allowing further penetration into the workpiece.

With the drill bit extending into the recess, the method 600 further includes inspecting 604 the drill bit at a location immediately adjacent to the workpiece to identify a visual indicator of the drill bit at the location. The term "immediately adjacent" is intended to refer to the visual indicator that is closest to a surface of the workpiece while remaining visible therefrom. As the drill bit passes into the workpiece, the visual indicator nearest, i.e., immediately adjacent, to the surface of the workpiece that can be seen by the operator is descriptive of the step actively cutting into the workpiece. Visual indicators already hidden by the workpiece are indicative of prior bore diameters that have since been expanded upon. Conversely, visual indicators separated from the workpiece by other visual indicators are indicative of potential future bore diameters that may be achieved if the operator continues to drill further into the workpiece.

Inspecting 604 the drill bit can occur while the drill bit is stationary (i.e., not rotating) or while the drill bit rotates. The visual indicator may be sufficiently visible such that the operator (user) can determine a characteristic of the visual indicator while the drill bit is rotating at rotational speeds of at least 10 revolutions per minute (RPM), such as at least 20 RPM, such as at least 30 RPM, such as at least 40 RPM, such as at least 50 RPM, such as at least 60 RPM, such as at least 75 RPM, such as at least 100 RPM, such as at least 200 RPM, such as at least 300 RPM, such as at least 400 RPM, such as at least 500 RPM, such as at least 600 RPM, such as at least 750 RPM, such as at least 1000 RPM, such as at least 1500 RPM. In some implementations, the operator (user) may determine the characteristic of the visual indicator while the drill bit is rotating at the full speed capability of the drill. That is, the visual indicator may be detectable such that the operator (user) can determine the characteristic of the visual indicator at any rotational speed. It is believed that alphanumeric labels are not readable at rotational speeds in excess of approximately 30 RPM. At such speeds, the small font required to fit on the drill bit becomes too difficult to discern. Thus, characteristics like color, surface finish, and the like may be more suitable for applications where the operator (user) wishes to determine speed without significantly slowing down rotation of the drill bit. These characteristics may be determined regardless of whether the drill bit is actively rotating or stationary.

The drill bit can include a plurality of visual indicators that are separate from one another. Each of the visual indicators is associated with one of the cutting surfaces on the drill bit, i.e., one of the steps of the drill bit. By inspecting 604 the visual indicator at the location immediately adjacent to the workpiece, the operator (user) can determine which step, i.e., which cutting surface, is actively boring into the workpiece. Color is merely an example visual indicator used to identify which step is actively boring into the workpiece. Other example visual indicators include reflectiveness, texture, groove depth or indicia, and the like.

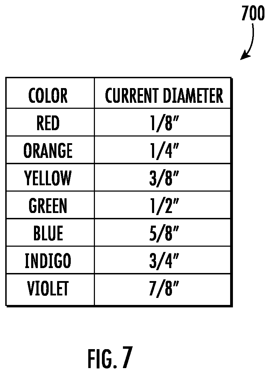

The method 600 further includes referencing 606 the identified visual indicator to a lookup table and determining 608 a diameter of the recess based on the referencing 606. The lookup table may include, for example, two data sets associated with one another. A first data set can correspond to identifiable visual indicators. A second data set can correspond to different diameters. Each data point in the first data set may be correlated with a data point in the second set such that the operator (user) can quickly match the identified 604 color to a corresponding diameter. By way of non-limiting example, the lookup table can include a table such as illustrated in FIG. 7.

Referring to FIG. 7, an example lookup table 700 is provided. The lookup table 700 can include a first column (i.e., first dataset) listing the colors of the various visual indicators associated with the drill bit and a second column (i.e., a second dataset) listing corresponding diameters associated with the colors in the first column. By way of example, where the identified 604 visual indicator is yellow, the operator (user) can use the lookup table 700 to identify the current diameter of the recess to be 3/8". Similarly, where the identified 604 visual indicator is blue, the operator (user) can use the lookup table 700 to identify the current diameter of the recess to be 5/8". While seven rows are provided in the lookup table 700, the number of entries in the dataset (i.e., the number of rows in the lookup table) can include fewer or greater number of entries based on the number of steps in the drill bit.

While the lookup table 700 depicts the colors in alphanumeric characters, in other embodiments, the colors can be depicted by their color. Where color is not used as the first data set, i.e., the visual indicator is not color based, the first data set may be correspondingly adjusted to match the visual indicator.

Further aspects of the invention are provided by one or more of the following embodiments:
Embodiment 1. A drill bit comprising: a body extending from a shank to a point angle, wherein the body comprises: a plurality of steps each associated with a different cutting diameter; a first groove disposed between a first pair of adjacent steps of the plurality of steps and radially inset from an outer diameter of each of the first pair of adjacent steps; and a first visual indicator disposed in the first groove.
Embodiment 2. The drill bit of embodiment 1, wherein the first pair of adjacent steps includes a first step disposed on a first side of the first groove between the point angle and the first groove and a second step disposed on a second side of the first groove opposite the first side, wherein each of the first and second steps defines a cutting surface, and wherein the first step is spaced apart from the first groove by a shoulder having a cylindrical outer profile.
Embodiment 3. The drill bit of embodiment 2, wherein the first visual indicator defines a cutting diameter associated with the first step.
Embodiment 4. The drill bit of any one or more of embodiments 1 to 3, wherein the first visual indicator comprises a marking disposed in the first groove, and wherein the marking is discernable by an operator while the drill bit is rotatably driven by a drill at a rotational speed of at least 60 revolutions per minute (RPM).
Embodiment 5. The drill bit of any one or more of embodiments 1 to 4, wherein the first visual indicator comprises a color disposed in the first groove.
Embodiment 6. The drill bit of embodiment 5, wherein the body comprises a single-piece construction, and wherein the color is painted in the first groove.
Embodiment 7. The drill bit of any one or more of embodiments 1 to 6, wherein the body further comprises: a second groove disposed between a second pair of adjacent steps and radially inset from the outer diameter of each of the adjacent steps; and a second visual indicator disposed in the second groove, wherein the first and second visual indicators are different from one another.
Embodiment 8. The drill bit of embodiment 7, wherein the body further comprises: a third pair of adjacent steps disposed between the first and second pairs of adjacent steps; and a third groove disposed between the third pair of adjacent steps and radially inset from the outer diameter of each of the adjacent steps, wherein the third groove is essentially free of a visual indicator.
Embodiment 9. The drill bit of any one or more of embodiments 1 to 8, wherein the first visual indicator is disposed in the first groove at a location that avoids contact with material of a workpiece as the drill bit penetrates into the workpiece.
Embodiment 10. The drill bit of any one or more of embodiments 1 to 9, wherein the first groove extends circumferentially around a longitudinal axis of the drill bit.
Embodiment 11. A method of boring a recess into a workpiece, the method comprising: moving a drill bit into a recess in a workpiece; with the drill bit extending into the recess, inspecting the drill bit at a location immediately adjacent to the workpiece to identify a visual indicator disposed in a groove of the drill bit at the location; referencing the visual indicator to a lookup table; and determining a diameter of the recess based on the referencing.
Embodiment 12. The method of embodiment 11, wherein inspecting the drill bit is performed while the drill bit is rotating at a rotational speed of at least 20 RPM.
Embodiment 13. The method of any one or more of embodiments 11 or 12, wherein the drill bit defines a longitudinal axis, and wherein the groove extends around the longitudinal axis.
Embodiment 14. The method of any one or more of embodiments 11 to 13, wherein the drill bit is a stepped drill bit, and wherein the inspected visual indicator is associated with a diameter of a step of the drill bit that is already disposed within the workpiece.
Embodiment 15. The method of any one or more of embodiments 11 to 14, wherein the visual indicator comprises a color disposed in the groove, and wherein referencing the visual indicator to the lookup table comprises: comparing the color to a plurality of colors in the lookup table to determine a matching color; and reading a diameter associated with the matching color.
Embodiment 16. The method of any one or more of embodiments 11 to 15, further comprising continuing to move the drill bit into the recess in response to determining the diameter of the recess is too small.
Embodiment 17. A stepped drill bit comprising: a shank; and a generally conical body extending from the shank to a point angle, wherein the generally conical body comprises: a plurality of sequentially larger steps arranged from the point angle to the shank, each of the steps having a cutting surface associated with a different cutting diameter; a first groove disposed between a first pair of adjacent steps of the plurality of sequentially larger steps and radially inset from an outer diameter of each of the first pair of adjacent steps; and a second groove disposed between a second pair of adjacent steps of the plurality of sequentially larger steps and radially inset from an outer diameter of each of the second pair of adjacent steps.
Embodiment 18. The stepped drill bit of embodiment 17, wherein the first groove comprises a first color and the second groove comprises a second color different from the first color, and wherein the first and second colors are detectable while the stepped drill bit rotates.
Embodiment 19. The stepped drill bit of any one or more of embodiments 17 or 18, wherein the first pair of adjacent steps includes a first step disposed on a first side of the first groove between the point angle and the first groove and a second step disposed on a second side of the first groove opposite the first side, wherein each of the first and second steps defines a cutting surface, and wherein the first step is spaced apart from the first groove by a shoulder having a cylindrical outer profile.
Embodiment 20. The stepped drill bit of any one or more of embodiments 17 to 19, wherein the first groove is painted with a color indicative of a diameter of the first step.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal language of the claims.

## Claims

1. A drill bit comprising:
a body extending from a shank to a point angle,
wherein the body comprises:
a plurality of steps each associated with a different cutting diameter;
a first groove disposed between a first pair of adjacent steps of the plurality of steps and radially inset from an outer diameter of each of the first pair of adjacent steps; and
a first visual indicator disposed in the first groove.

2. The drill bit of claim 1, wherein the first pair of adjacent steps includes a first step disposed on a first side of the first groove between the point angle and the first groove and a second step disposed on a second side of the first groove opposite the first side, wherein each of the first and second steps defines a cutting surface, and wherein the first step is spaced apart from the first groove by a shoulder having a cylindrical outer profile.

3. The drill bit of claim 2, wherein the first visual indicator defines a cutting diameter associated with the first step.

4. The drill bit of any one of claims 1 to 3, wherein the first visual indicator comprises a marking disposed in the first groove, and wherein the marking is discernable by an operator while the drill bit is rotatably driven by a drill at a rotational speed of at least 30 revolutions per minute (RPM).

5. The drill bit of any one of claims 1 to 4, wherein the first visual indicator comprises a color disposed in the first groove.

6. The drill bit of claim 5, wherein the body comprises a single-piece construction, and wherein the color is painted in the first groove.

7. The drill bit of any one of claims 1 to 6, wherein the body further comprises:
a second groove disposed between a second pair of adjacent steps and radially inset from the outer diameter of each of the adjacent steps; and
a second visual indicator disposed in the second groove,
wherein the first and second visual indicators are different from one another.

8. The drill bit of claim 7, wherein the body further comprises:
a third pair of adjacent steps disposed between the first and second pairs of adjacent steps; and
a third groove disposed between the third pair of adjacent steps and radially inset from the outer diameter of each of the adjacent steps,
wherein the third groove is essentially free of a visual indicator.

9. The drill bit of any one of claims 1 to 8, wherein the first visual indicator is disposed in the first groove at a location that avoids contact with material of a workpiece as the drill bit penetrates into the workpiece.

10. A method of boring a recess into a workpiece, the method comprising:
moving the drill bit of claim 1 into a recess in a workpiece;
with the drill bit extending into the recess, inspecting the drill bit at a location immediately adjacent to the workpiece to identify the first visual indicator at the location;
referencing the identified visual indicator to a lookup table; and
determining a diameter of the recess based on the referencing.

11. The method of claim 10, wherein inspecting the drill bit is performed while the drill bit is rotating at a rotational speed of at least 30 RPM.

12. The method of any one of claims 10 or 11, wherein the drill bit defines a longitudinal axis, and wherein the groove extends around the longitudinal axis.

13. The method of any one of claims 10 to 12, wherein the drill bit is a stepped drill bit, and wherein the inspected first visual indicator is associated with a diameter of a step of the drill bit that is already disposed within the workpiece.

14. The method of any one of claims 10 to 13, wherein the first visual indicator comprises a color disposed in the groove, and wherein referencing the first visual indicator to the lookup table comprises:
comparing the color to a plurality of colors in the lookup table to determine a matching color; and
reading a diameter associated with the matching color.

15. The method of any one of claims 10 to 14, further comprising continuing to move the drill bit into the recess in response to determining the diameter of the recess is too small.
